# EUROPEAN PATENT APPLICATION

(11) **EP 2 579 151 A1**
(43) Date of publication of application: **10.04.2013**
(21) Application number: 12186342.7
(22) Date of filing: 27.09.2012
(51) Int. Cl.: G06F 9/44

(54) **Display control apparatus, display control method, and recording medium storing display control program**

(30) Priority: 03.10.2011 JP 2011219585
(71) Applicant: FUJITSU LIMITED, Kawasaki-shi, Kanagawa 211-8588 (JP)
(72) Inventor: Fukuda, Masahiro, Kanagawa, 211-8588 (JP); Kouge, Kiyoshi, Kanagawa, 211-8588 (JP)
(74) Representative: HOFFMANN EITLE

(57) **Abstract**

A display control apparatus includes receiving unit that receives an instruction to display a first component which indicates a process corresponding to a first process type, and controlling unit that controls a display device to display the first component in accordance with the received instruction and display a second component, which indicates a process corresponding to a second process type, associating with the first component on the basis of an order relationship of the first process type and the second process type.

## Description

### FIELD

The embodiments discussed herein are related to creation of diagrams.

### BACKGROUND

In a data center, many devices such as servers and storage devices and networks are arranged, and many business systems operate. In the data center, the devices and the business systems are monitored and maintained. A Run Book Automation (RBA) product that automates the monitoring and the maintenance in the data center is known. In the RBA product, various operations such as operations for the business systems and operations to be performed by a person are defined as components. Examples of the operations for the business systems are activation of a server and a patch application. An example of the operations to be performed by a person is approval of a person in charge. An administrator connects components to each other using an arrow and thereby creates a workflow that describes an operation task procedure to be automated.

There are a wide variety of operation tasks in the data center. Thus, the administrator creates many workflows. In order to create the workflows, the administrator repeatedly selects target components from among many components. The selection task places a burden on the administrator.

It is considered that the workflows are efficiently created by estimating a component to be next selected during the creation of the workflows. For example, as methods for the estimation, there are Most Recently Used (MRU) and Most Frequently Used (MFU). In MRU, a component that is most recently used is estimated as a selection candidate. In MFU, a component that is most frequently used is estimated as a selection candidate.

In addition, a technique for using various tasks performed in the past and records indicating results of the tasks and thereby presenting a desired task to be next performed in a certain situation has been proposed.

In MRU and MFU that are the estimation methods, only a component that is most recently used and a component that is most frequently used are estimated as selection candidates. Thus, components other than the component that is most recently used and the component that is most frequently used are not estimated as selection candidates. Thus, the workflows may not be efficiently created.

### SUMMARY

According to an aspect of the invention, a display control apparatus includes a processor that executes a procedure, the procedure including receiving an instruction to display a first component which indicates a process corresponding to a first process type, and controlling a display device to display the first component in accordance with the received instruction and display a second component, which indicates a process corresponding to a second process type, associating with the first component on the basis of an order relationship of the first process type and the second process type.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

FIG. 1 illustrates an example of a functional configuration of a diagram creation supporting apparatus according to a first embodiment;
FIG. 2 illustrates an example of the configuration of order relationship information;
FIG. 3 illustrates an example of a workflow creation screen;
FIG. 4 illustrates an example of a functional configuration of a diagram creation supporting apparatus according to a second embodiment;
FIG. 5 illustrates an example of a functional configuration of a management system according to a third embodiment;
FIG. 6 illustrates an example of the configuration of data included in a first table;
FIG. 7 illustrates an example of the configuration of data included in a second table;
FIG. 8 illustrates an example of the configuration of data included in a third table;
FIG. 9 illustrates an example of the configuration of data included in a fourth table;
FIG. 10 illustrates an example of the configuration of data included in a fifth table;
FIG. 11 illustrates an example of the configuration of data included in a sixth table;
FIG. 12 illustrates an example of the configuration of data included in a seventh table;
FIG. 13 illustrates an example of a workflow;
FIG. 14 illustrates an example of a workflow made up of operation-type components;
FIG. 15 illustrates an example of a system specifying screen;
FIG. 16 illustrates an example of a workflow creation screen;
FIG. 17 illustrates an exemplary flowchart of a procedure of a grouping process;
FIG. 18 illustrates an exemplary flowchart of a procedure of a process of calculating a ratio;
FIG. 19 illustrates an exemplary flowchart of a procedure of a process of specifying a selection candidate; and
FIG. 20 illustrates an example of a hardware configuration of a computer that executes a diagram creation support program.

### DESCRIPTION OF EMBODIMENTS

Hereinafter, embodiments of a display control program disclosed herein and a diagram creation supporting apparatus disclosed herein are described in detail with reference to the accompanying drawings. The embodiments do not limit techniques disclosed herein. The embodiments may be combined within a scope in which details of processes do not contradict each other.

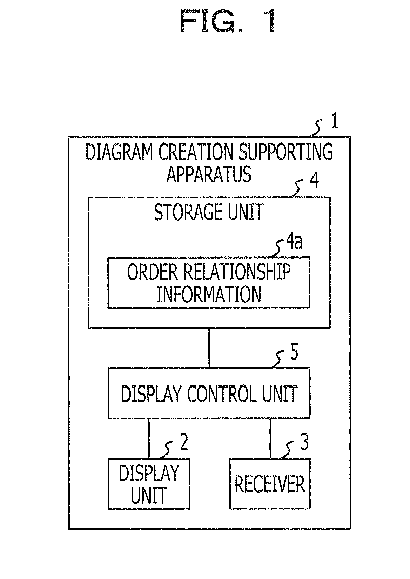

A diagram creation supporting apparatus 1 according to a first embodiment is described. FIG. 1 illustrates an example of a functional configuration of the diagram creation supporting apparatus 1 according to the first embodiment. As illustrated in FIG. 1, the diagram creation supporting apparatus 1 includes a display unit 2, a receiver 3, a storage unit 4 and a display control unit 5. The diagram creation supporting apparatus 1 is an apparatus that arranges components and support creation of diagrams. The diagram creation supporting apparatus 1 is a computer, for example. The diagram creation supporting apparatus 1 causes the display unit 2 to display a workflow creation screen and supports a user such as an administrator to create a workflow. The workflow is a procedure of a series of tasks, while the procedure is defined by combining various components.

The display unit 2 displays various types of information. For example, the display unit 2 displays the workflow creation screen. The workflow creation screen includes a workflow display region and a selection candidate region, for example. In the workflow display region, a workflow that is being created is displayed. In the selection candidate region, a component that is a selection candidate estimated to be next arranged is displayed. An example of a device of the display unit 2 is a display device such as a liquid crystal display (LCD).

The receiver 3 receives various instructions. For example, the receiver 3 receives an instruction to cause the display unit 2 to display a component. Examples of the receiver 3 are operation receiving devices such as a mouse and a keyboard.

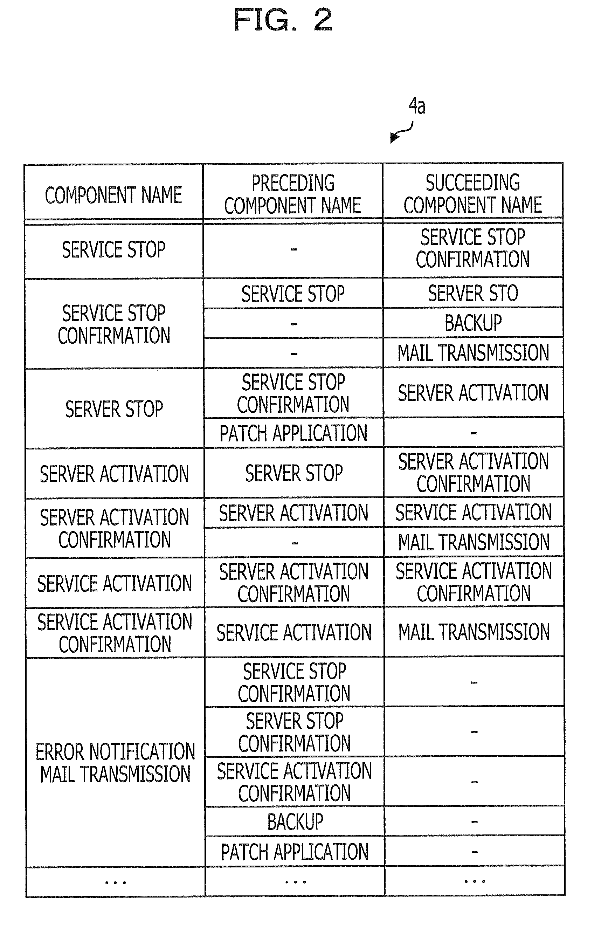

The storage unit 4 stores various types of information. For example, the storage unit 4 stores order relationship information 4a that indicates, for each of components, a component that tends to be arranged in front of or at the back of the interested component. FIG. 2 illustrates an example of the configuration of the order relationship information 4a. As illustrated in FIG. 2, the order relationship information 4a has an item for component names, an item for preceding component names and an item for succeeding component names. Examples of a device of the storage unit 4 are data-rewritable semiconductor memories such as a flash memory and a nonvolatile static random access memory (NVSRAM) and storage devices such as a hard disk and an optical disc.

The item for component names is a region for storing the names of components. The item for preceding component names is a region for storing the names of components that tend to be arranged so as to precede the components registered in the item for component names in a workflow. The item for succeeding component names is a region for storing the names of components that tend to be arranged so as to succeed the components registered in the item for component names in the workflow.

The example illustrated in FIG. 2 indicates that a "service stop confirmation" component tends to be arranged as a component succeeding a "service stop" component. The example illustrated in FIG. 2 also indicates that the "service stop" component tends to be arranged as a component preceding the "service stop confirmation" component. The example illustrated in FIG. 2 also indicates that a "server stop" component, a "backup" component and a "mail transmission" component" tend to be arranged as components succeeding the "service stop confirmation" component.

The display control unit 5 controls the display unit 2 and thereby causes the display unit 2 to display various types of information. For example, the display control unit 5 controls the display unit 2 and thereby causes the display unit 2 to display the workflow creation screen in order to create a workflow. When the receiver 3 receives an instruction to display a first component that indicates details of a process corresponding to a first process type, the display control unit 5 causes the display unit 2 to display the first component. The display control unit 5 associates the first component with a second component on the basis of an order relationship between the first process type and a second process type, controls the display unit 2 and thereby causes the display unit 2 to display the first and second components. The second component indicates details of a process corresponding to the second process type that is defined by the order relationship between the first and second process types on the basis of the order relationship information 4a.

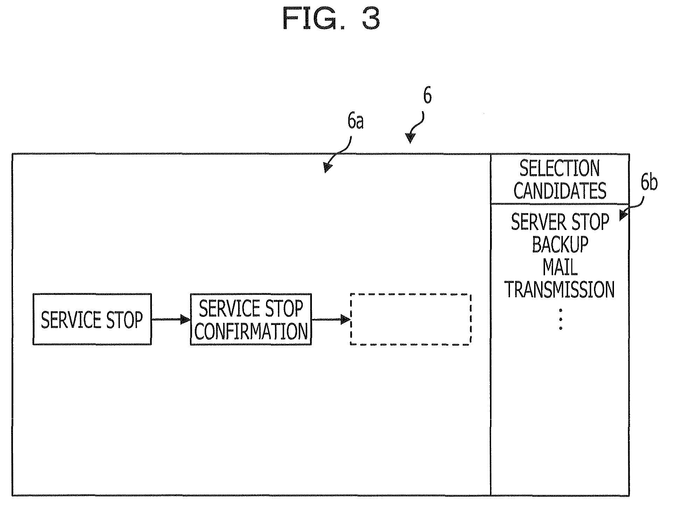

FIG. 3 illustrates an example of the workflow creation screen. A workflow creation screen 6 includes a workflow display region 6a and a selection candidate region 6b. The workflow display region 6a is a region for displaying a workflow that is being created or has been completely created. The selection candidate region 6b is a region for displaying, as selection candidates, components estimated to be next arranged.

When the receiver 3 receives the instruction to display the first component indicating the details of the process corresponding to the first process type, the display control unit 5 specifies, on the basis of the order relationship information 4a, a component tending to be arranged in front of the first component and a component tending to be arranged at the back of the first component. For example, when the "service stop confirmation" component is arranged on the workflow creation screen illustrated in FIG. 3, the display control unit 5 specifies the "service stop" component as a component tending to be arranged in front of the "service stop confirmation" component and specifies the "server stop" component, the "backup" component and an "error notification mail transmission" component as components tending to be arranged at the back of the "service stop confirmation" component.

When a component does not exist in front of the first component, the display control unit 5 causes the display unit 2 to display the first component in the workflow display region 6a and display a component specified as a component tending to be arranged in front of the first component in the selection candidate region 6b. When a single component is specified as a component tending to be arranged in front of the first component, the display control unit 5 may cause the display unit 2 to display the specified component in the workflow display region 6a so that the specified component is arranged in front of the first component.

When a component does not exist at the back of the first component, the display control unit 5 causes the display unit 2 to display the first component in the workflow display region 6a and display a component specified as a component tending to be arranged at the back of the first component in the selection candidate region 6b. When a single component is specified as a component tending to be arranged at the back of the first component, the display control unit 5 may cause the display unit 2 to display the specified component in the workflow display region 6a so that the specified component is arranged at the back of the first component.

In the example illustrated in FIG. 3, when the "service stop confirmation" component is arranged, a component does not exist at the back of the "service stop confirmation". Components that tend to be arranged at the back of the "service stop confirmation" component are the three components, the "server stop" component, the "backup" component and the "error notification mail transmission" component. Thus, the three components are displayed in the selection candidate region 6b.

Examples of a device of the display control unit 5 are electronic circuits such as a central processing unit (CPU) and a micro processing unit (MPU). In addition, as the device of the display control unit 5, integrated circuits such as an application specific integrated circuit (ASIC) and a field programmable gate array (FPGA) may be used.

As described above, when receiving the instruction to display the first component, the diagram creation supporting apparatus 1 causes the display unit 2 to display the first component. In addition, the diagram creation supporting apparatus 1 associates the first component with the second component of the second process type defined by the order relationship with the first component and causes the display unit 2 to display the first and second components. Thus, the diagram creation supporting apparatus 1 associates the first component with the second component of the second process type defined by the order relationship with the first component, displays the first and second components, and may thereby display, on the basis of characteristics of a workflow, candidates for a component to be displayed.

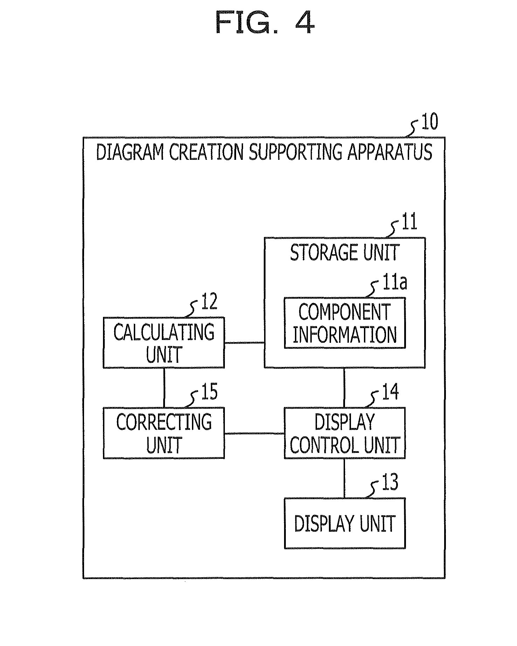

Next, a diagram creation supporting apparatus 10 according to a second embodiment is described. FIG. 4 illustrates an example of a functional configuration of the diagram creation supporting apparatus 10 according to the second embodiment. As illustrated in FIG. 4, the diagram creation supporting apparatus 10 includes a storage unit 11, a calculating unit 12, a display unit 13, a display control unit 14 and a corrector 15. The diagram creation supporting apparatus 10 is an apparatus that causes the display unit 13 to display a work flow creation screen and supports a user such as an administrator to create a workflow. The diagram creation supporting apparatus 10 is a computer, for example.

The storage unit 11 stores various types of information. For example, the storage unit 11 stores component information 11a that indicates components to be arranged in a workflow. The components are of various process types and provided for target systems for which workflows are to be created. For example, when a target system for which a work flow is to be created is related to operations of a computer, various operations to be performed for the computer are defined as components. When the target system for which the workflow is to be created is related to business, various procedures that are related to the business are defined as components. Examples of a device of the storage unit 11 are data-rewritable semiconductor memories such as a flash memory and an NVSRAM and storage devices such as a hard disk and an optical disc.

The calculating unit 12 performs various calculations. For example, the calculating unit 12 calculates the ratio of the number of predetermined components arranged in a workflow created for a target system to the number of all components arranged in the workflow created for the target system. In this case, the predetermined components may be any components as long as the components are arranged in the workflow.

The display unit 13 displays various types of information. For example, the display unit 13 displays the workflow creation screen. The workflow creation screen includes a workflow display region and a selection candidate region. In the workflow display region, a workflow that is being created is displayed. In the selection candidate region, a component that is a selection candidate estimated to be next arranged is displayed. An example of a device of the display unit 13 is a display device such as an LCD.

The display control unit 14 controls the display unit 13 and thereby causes the display unit 13 to display various types of information. For example, the display control unit 14 controls the display unit 13 and thereby causes the display unit 13 to display the workflow creation screen in order to create a workflow. When receiving information of various operations from a receiver (not illustrated), the display control unit 14 updates details displayed on the workflow creation screen on the basis of details of the operations. The display control unit 14 controls the display unit 13 and thereby causes the display unit 13 to display, in the selection candidate region of the display unit 13, a component that is among the components indicated by the component information 11a stored in the storage unit 11 and is a selection candidate estimated to be next arranged. In this case, the estimation may be performed using any method. For example, a component that has been most recently used or most frequently used may be estimated as the selection candidate. For example, information on a component that tends to be arranged in front of or at the back of each of components may be stored, and a component to be arranged in front of or at the back of a component arranged in a workflow may be estimated as the selection candidate on the basis of the stored information.

The corrector 15 corrects a selection candidate set that is one or more components that are displayed as selection candidates. For example, the corrector 15 adds or removes the same component as the predetermined components to or from the selection candidate set on the basis of the ratio calculated by the calculating unit 12, and thereby corrects the selection candidate set. Components to be arranged in a workflow vary depending on a system for which the workflow is to be created. For example, many components may be arranged in a workflow for a specific system, and the ratio of the number of predetermined components of the workflow to the number of all the components of the workflow may be high. Thus, the corrector 15 adds or removes the same component as the predetermined components to or from the selection candidate set on the basis of the ratio of the number of the predetermined components of the workflow created for the specific system to the number of all the components of the workflow created for the specific system, and thereby corrects the selection candidate set. In the example of FIG. 4, the functional configuration is illustrated, and the calculating unit 12, the display control unit 14 and the corrector 15 are separated from each other. The calculating unit 12, the display control unit 14 and the corrector 15, however, may be included in a single device. Examples of the device are electronic circuits such as a CPU and an MPU. As the device, integrated circuits such as an ASIC and an FPGA may be used.

As described above, the diagram creation supporting apparatus 10 stores the component information 11a that indicates the components to be arranged in the workflow. The diagram creation supporting apparatus 10 calculates the ratio of the number of predetermined components of a workflow created for a target system to the number of all components of the workflow created for the target system. The diagram creation supporting apparatus 10 controls the display unit 13 and thereby causes the display unit 13 to display a component that is among the components indicated by the component information 11a stored in the storage unit 11 and is a selection candidate estimated to be next arranged. The diagram creation supporting apparatus 10 adds or removes, on the basis of the calculated ratio, the same component as the predetermined component to or from the selection candidate set. Thus, the diagram creation supporting apparatus 10 displays the screen on which a component that is to be used for a workflow to be created may be selected on the basis of a target system for which the workflow is to be created. The diagram creation supporting apparatus 10, therefore, may enable a workflow to be efficiently created.

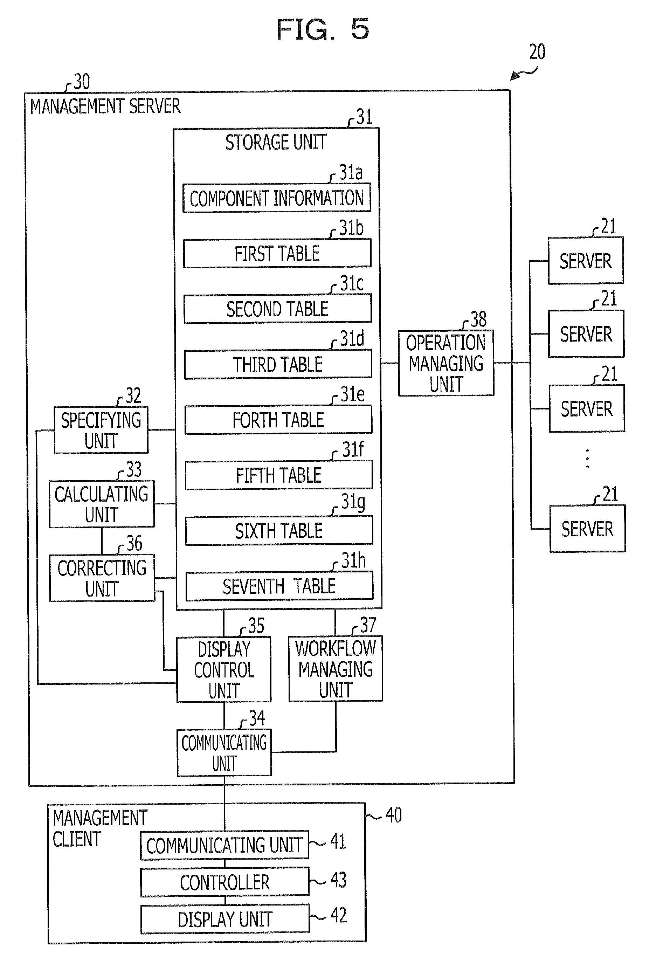

Next, a third embodiment is described. The third embodiment describes that a workflow is created in order to automate monitoring and maintenance tasks of a management system 20 that performs the monitoring and maintenance tasks in a data center. FIG. 5 illustrates an example of a functional configuration of the management system 20 according to the third embodiment. In the data center, many servers 21 are installed and many business systems operate. The management system 20 monitors and maintains the servers 21.

The management system 20 includes a management server 30 and a management client 40. The management server 30 functions as a diagram creation supporting apparatus. The management server 30, the management client 40 and the servers 21 are connected to each other through a network (not illustrated) and may communicate with each other. The network may be a wired or wireless network. Examples of the network are any communication networks such as a local area network (LAN) and a virtual private network (VPN).

The management server 30 manages workflows and monitors and maintains the servers 21 in accordance with the workflows. The management server 30 transmits various types of information to be used to create a workflow to the management client 40 and supports the creation of the workflow in the management client 40.

The management client 40 displays various screens such as a workflow creation screen on the basis of the information transmitted by the management server 30, and receives information that has been entered by a user such as an administrator and is related to creation of a workflow. The management client 40 transmits the received operation information indicating various operations and information of a workflow created on the workflow creation screen to the management server 30. The management server 30 updates details displayed on the various screens on the basis of the operation information transmitted by the management client 40. The management server 30 manages the information that has been transmitted by the management client 40 and indicates the workflow. FIG. 5 illustrates the single management client 40. A plurality of management clients 40 may be included in the management system 20.

As illustrated in FIG. 5, the management server 30 includes a storage unit 31, a specifying unit 32, a calculating unit 33, a communicating unit 34, a display control unit 35, a corrector 36, a workflow managing unit 37 and an operation managing unit 38.

The storage unit 31 stores various types of information. For example, the storage unit 31 stores component information 31a, a first table 31b, a second table 31c, a third table 31d and a fourth table 31e, a fifth table 31f, a sixth table 31g and a seventh table 31h. Examples of a device of the storage unit 31 are data-rewritable semiconductor memories such as a flash memory and an NVSRAM and storage devices such as a hard disk and an optical disc.

The component information 31a includes information of various components that are arranged in and used for workflows for maintenance and monitoring tasks. The various components are of process types varying depending on details of operations. For example, the various components include operation-type components for changing the states of various types of software such as an operating system (OS), middleware and an application, for example, for activating and stopping the various types of software. In addition, the various components also include confirmation-type components for confirming the states of the various types of software. The various components also include approval-type components for promoting the administrator or the like to give approval and make a confirmation. The various components also include notification-type components for providing various notifications to the administrator or the like. The component information 31a further includes identification information such as names identifying the components. The component information 31a further includes commands to perform processes indicated by the components. The component information 31a further includes information (such as information of process procedures) to be used to perform the processes.

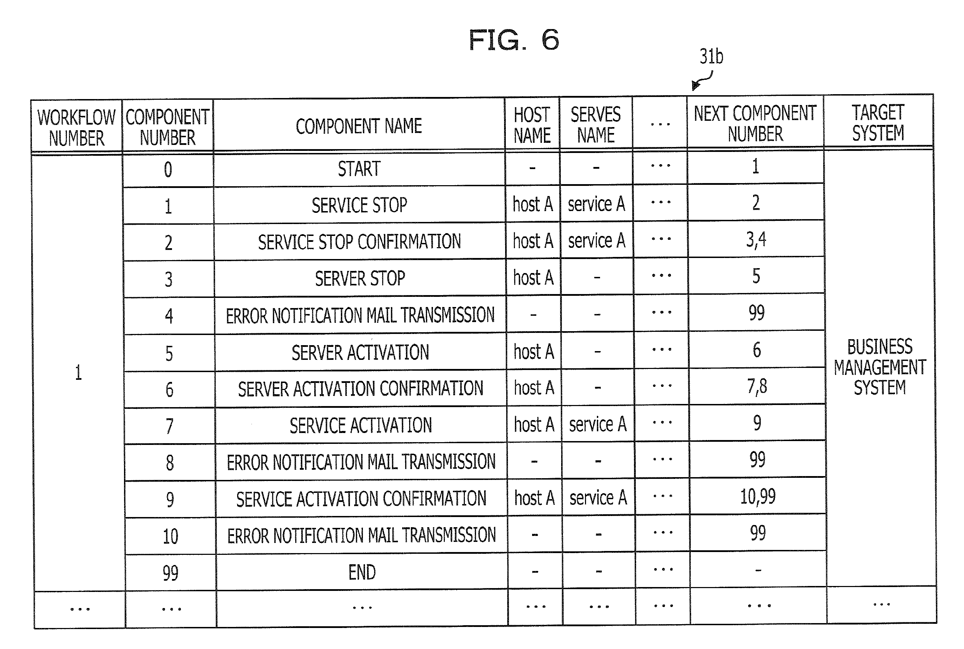

The first table 31b is a table that is used to manage all created workflows. FIG. 6 illustrates an example of the configuration of data included in the first table 31b. As illustrated in FIG. 6, the first table 31b includes an item for workflow numbers, an item for component numbers, an item for component names, an item for host names, an item for service names, an item for next component numbers, and an item for target systems.

When a workflow is created, an identification number is provided for the created workflow. In addition, numbers that indicate the order of processes in the workflow are provided for components included in the workflow, respectively.

The item for workflow numbers is a region for storing identification numbers that identify workflows. The item for component numbers is a region for storing numbers that indicate the order of processes indicated by components of each of the workflows. The item for component names is a region for storing the names of components. The item for host names is a region for storing host names of servers 21 that perform processes indicated by the components. The item for service names is a region for storing the names of services for which the processes indicated by the components are performed. The item for next component numbers is a region for storing numbers of components that indicate processes to be next performed in each of the workflows. The item for target systems is a region for storing the names of systems for which the workflows are processed.

The example illustrated in FIG. 6 indicates that processes indicated by components with component numbers "0" to "10" and "99" are registered as a workflow with a workflow number "1", and that a system for which the workflow is to be processed is a "business management system". In a record corresponding to the component number "0", a word "start" that indicates the start of a process of the workflow is registered. The record corresponding to the component number "0" indicates that the next process is a process indicated by the component with the component number "1". A record corresponding to the component number "1" indicates that the process indicated by the "service stop" component is performed to stop a service provided by a server 21 with a host name "host A" and having a service name "service A", and that the next process is a process indicated by the component with the component number "2". A record corresponding to the component number "2" indicates that the process indicated by the "service stop confirmation" component is performed to confirm the stop of the service provided by the server 21 with the host name "host A" and having the service name "service A", and that the next process is a process indicated by the component with the component name "3" or "4". A record corresponding to the component number "3" indicates that the process indicated by the "server stop" component is performed to stop the server with the host name "host A", and that the next process is a process indicated by the component with the component number "5". A record corresponding to the component number "4" indicates that the process indicated by the "error notification mail transmission" is performed to transmit an error notification mail, and that the next process is a process indicated by the component with the component number "99". A record corresponding to the component number "5" indicates that the process indicated by the "server activation" component is performed to activate the server 21 with the host name "host A", and that the next process is a process indicated by the component with the component number "6". A record corresponding to the component number "6" indicates that the process indicated by the "server activation confirmation" component is performed to confirm the activation of the server 21 with the host name "host A", and that the next process is a process indicated by the component with the component number "7" or "8". A record corresponding to the component number "7" indicates that the process indicated by the "service activation" component is performed to activate the service provided by the server 21 with the host name "host A" and having the service name "service A", and that the next process is a process indicated by the component with the component number "9". A record corresponding to the component number "8" indicates that the process indicated by the "error notification mail transmission" component is performed to transmit an error notification mail, and that the next process is a process indicated by the component with the component number "99". A record corresponding to the component number "9" indicates that the process indicated by the "service activation confirmation" component is performed to confirm the activation of the service provided by the server 21 with the host name "host A" and having the service name "service A", and that the next process is a process indicated by the component with the component number "10" or "99". A record corresponding to the component number "10" indicates that the process indicated by the "error notification mail transmission" is performed to transmit an error notification mail, and that the next process is a process indicated by the component with the component number "99". In a record corresponding to the component number "99", a word "end" that indicates the end of the process of the workflow is registered. Thus, the record corresponding to the component number "99" indicates the end of the process. The information of the items are registered in the first table 31 by the workflow managing unit 37 (described later). The first table 31b is used for processes that are performed by the specifying unit 32 (described later), the calculating unit 33 (described later) and the display control unit 35 (described later).

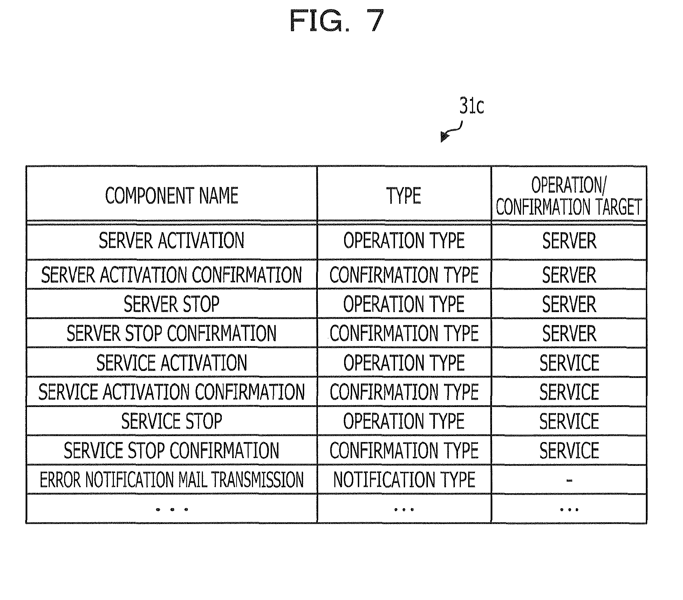

The second table 31c is a table that stores process types of the components and targets on which the processes indicated by the components are performed. FIG. 7 illustrates an example of the configuration of data included in the second table 31b. As illustrated in FIG. 7, the second table 31c includes an item for component names, an item for types and an item for operation/confirmation targets.

The item for component names is a region for storing the names of the components. The item for types is a region for storing the process types of the components. The item for operation/confirmation targets is a region for storing targets to be confirmed and targets on which processes indicated by components are performed. In the item for operation/confirmation targets, a server, a service or "-" that indicates there is no target is set in each of records.

Process types of components included as standard in software for creating a workflow are pre-registered in the second table 31c. When a user may create a component on the basis of software (such as middleware or an application) for a target to be operated, a process type of the component is specified on the basis of a change in the state of the target before and after a process indicated by the component created by the user is performed. For example, the management server 30 receives information of the states of the servers 21 included in the management system 20 before and after the process indicated by the component created by the user is performed. When any of the states of the servers 21 before the process indicated by the component is different from the state of the server 21 after the process on the basis of the received information, the management server 30 determines that the interested component is an operation-type component. When the states of the servers 21 are the same before and after the process, the management server 30 determines that the interested component is of a certain process type, for example, is a confirmation-type component. The management server 30 registers the result of the determination of the process type in the second table 31c and may thereby specify the process type of the component created by the user.

The example illustrated in FIG. 7 indicates that a process type of the "server activation" component is an "operation type" and an operation target corresponding to the "server activation" component is a "server". The example illustrated in FIG. 7 also indicates that a process type of the "server activation confirmation" component is a "confirmation type" and a confirmation target corresponding to the "server activation confirmation" component is a "server". The example illustrated in FIG. 7 also indicates that a process type of the "server stop" component is an "operation type" and an operation target corresponding to the "server stop" component is a "server". The example illustrated in FIG. 7 also indicates that a process type of the "server stop confirmation" component is a "confirmation type", and a confirmation target corresponding to the "server stop confirmation" component is a "server". The example illustrated in FIG. 7 also indicates that a process type of the "service activation" component is an "operation type" and an operation target corresponding to the "service activation" component is a "service". The example illustrated in FIG. 7 also indicates that a process type of the "service activation confirmation" component is a "confirmation type" and a confirmation target corresponding to the "service activation confirmation" component is a "service". The example illustrated in FIG. 7 also indicates that a process type of the "service stop" component is an "operation type" and an operation target corresponding to the "service stop" component is a "service". The example illustrated in FIG. 7 also indicates that a process type of the "service stop confirmation" component is a "confirmation type" and a confirmation target corresponding to the "service stop confirmation" component is a "service". The example illustrated in FIG. 7 also indicates that a process type of the "error notification mail transmission" component is a "notification type".

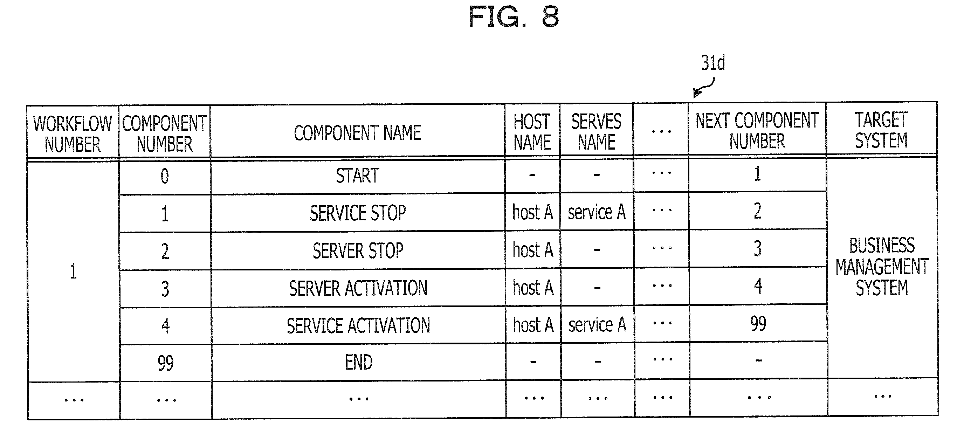

The third table 31d is a table that is used to manage a workflow that has been made up of operation-type components and created in order to specify a group (described later). FIG. 8 illustrates an example of the configuration of data included in the third table 31d. As illustrated in FIG. 8, the third table 31d has the same structure as the first table 31b and includes an item for workflow numbers, an item for component names, an item for host names, an item for service names, an item for next component numbers and an item for target systems.

A workflow that is made up of operation-type components and created in order to specify a group is stored in the third table 31d. FIG. 8 illustrates an example of a workflow that is created from the workflow illustrated in FIG. 6 and made up of the operation-type components that are the "service stop" component, the "server stop" component, the "server activation" component and the "service activation" component. In the example illustrated in FIG. 8, the process indicated by the "service stop" component is registered in a record corresponding to a component number "1". In the example illustrated in FIG. 8, the process indicated by the "server stop" component is registered in a record corresponding to a component number "2". In the example illustrated in FIG. 8, the process indicated by the "server activation" component is registered in a record corresponding to a component number "3". In the example illustrated in FIG. 8, the process indicated by the "service activation" component is registered in a record corresponding to a component number "4".

Information of the items is registered in the third table 31d by the specifying unit 32 (described later). The third table 31d is used for a process that is performed by the specifying unit 32.

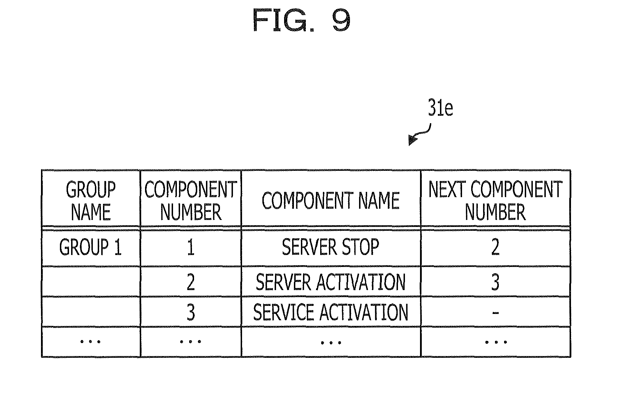

The fourth table 31e is a table that is used to manage information on groups obtained by grouping flows of components. FIG. 9 illustrates an example of the configuration of data included in the fourth table 31e. As illustrated in FIG. 9, the fourth table 31e includes an item for group names, an item for component numbers, an item for component names and an item for next component numbers.

When a group is created, a group name that identifies the group is provided for the group. Numbers that indicate the order of processes in the group are provided for components included in the group, respectively.

The item for group names is a region for storing group names that identifies groups. The item for component numbers is a region for storing the order of processes indicated by components included in each of the groups. The item for component names is a region for storing the names of components. The item for next component numbers is a region for storing numbers of components that indicate processes to be next performed in each of the groups.

In the example illustrated in FIG. 9, processes of components with component numbers "1" to "3" are registered as a group with a group name "group1" in the fourth table 31e. A record corresponding to the component number "1" indicates that the process indicated by the "server stop" component is performed and that the next process is the process indicated by the component with the component number "2". A record corresponding to the component number "2" indicates that the process indicated by the "server activation" component is performed and that the next process is the process indicated by the component with the component number "3". A record corresponding to the component number "3" indicates that the process indicated by the "service activation" component is performed.

The information of the items are stored in the fourth table 31e by the specifying unit 32 (described later). The fourth table 31e is used to for processes that are performed by the display control unit 35 (described later) and the corrector 36 (described later).

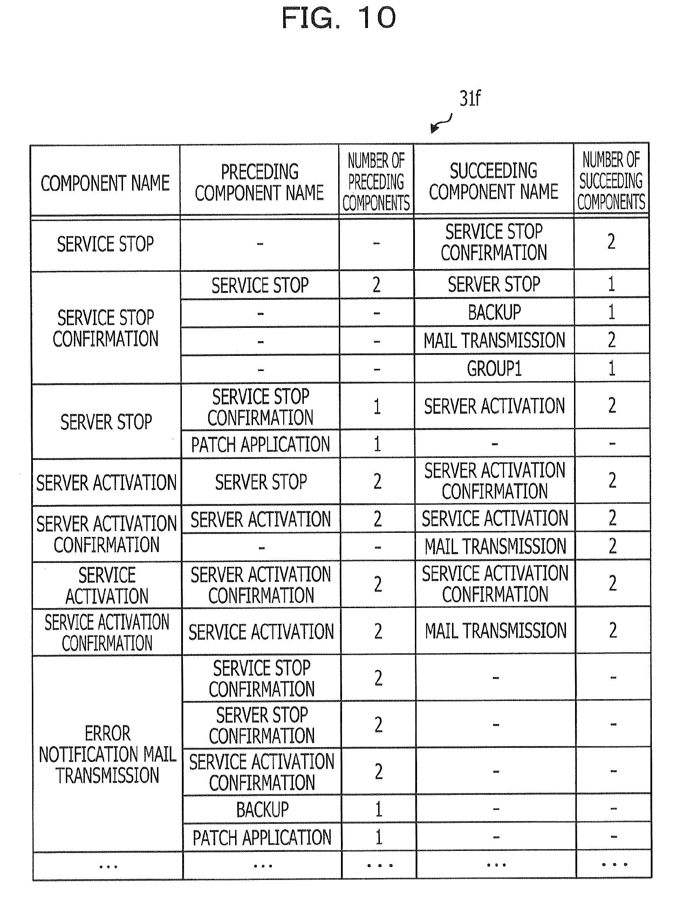

The fifth table 31f is a table that stores an arrangement tendency for each of components. FIG. 10 illustrates an example of the configuration of data included in the fifth table 31f. As illustrated in FIG. 10, the fifth table 31f includes an item for component names, an item for preceding component names, an item for the number of preceding components, an item for succeeding component names, and an item for the number of succeeding components. The item for component names is a region for storing the names of the components. The item for preceding component names is a region for storing, for each of the components registered in the item for component names, the name of a component or group arranged in a workflow and preceding the component registered in the item for component names. The item for the number of preceding components is a region for storing, for each of the components registered in the item for component names, the number of times when the component or group registered in the item for preceding components has been arranged in the workflow so as to precede the component registered in the item for component names. The item for succeeding component names is a region for storing, for each of the components registered in the item for component names, the name of a component or group arranged in the workflow and succeeding the component registered in the item for component names. The item for the number of succeeding components is a region for storing, for each of the components registered in the item for component names, the number of times when the component or group registered in the item for succeeding components has been arranged in the workflow so as to succeed the component registered in the item for component names.

The example illustrated in FIG. 10 indicates that the "service stop confirmation" component has been arranged twice as a component succeeding the "service stop" component. The example illustrated in FIG. 10 also indicates that the "service stop" component has been arranged twice as a component preceding the "service stop confirmation" component. The example illustrated in FIG. 10 also indicates that the "server stop" component, the "backup" component and the group with the group name "group" have been arranged once as components succeeding the "service stop confirmation" component, and the "mail transmission" component has been arranged twice as a component succeeding the "service stop confirmation" component.

Information of the items is registered in the fifth table 31f by the workflow managing unit 37 (described later). The fifth table 31f is used for a process to be performed by the display control unit 35 (described later).

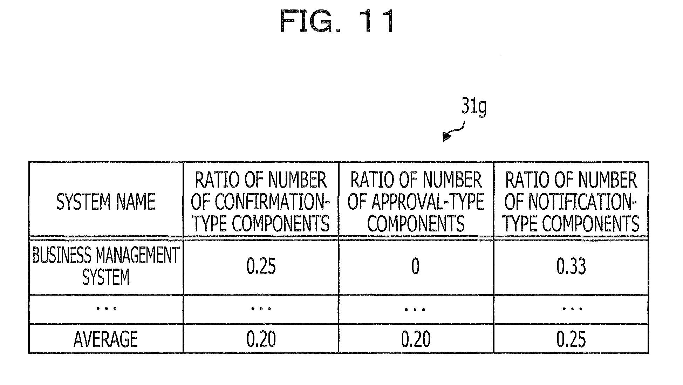

The sixth table 31g is a table that stores the ratio of the number of components of each of process types in a workflow to the number of all components of the workflow for each of systems. FIG. 11 illustrates an example of the configuration of data included in the sixth table 31g. As illustrated in FIG. 11, the sixth table 31g includes an item for system names, an item for the ratios of the numbers of confirmation-type components, an item for the ratios of the numbers of approval-type components and an item for the ratios of the numbers of notification-type components.

The item for system names is a region for storing, for each of systems, the name of the system for which the ratios of the numbers of components of a workflow to the number of all components of the workflow have been calculated. The item for the ratios of the numbers of confirmation-type components is a region for storing the ratio of the number of confirmation-type components of a workflow to the number of all components of the workflow for each of the systems registered in the item for system names. The item for the ratios of the numbers of approval-type components is a region for storing the ratio of the number of approval-type components of a workflow to the number of all components of the workflow for each of the systems registered in the item for system names. The item for the ratios of the numbers of notification-type components is a region for storing the ratio of the number of notification-type components of a workflow to the number of all components of the workflow for each of the systems registered in the item for system names.

The example illustrated in FIG. 11 indicates that the ratio of the number of confirmation-type components of a workflow to the number of all components of the workflow to be processed for a "business management system" is 0.25, the ratio of the number of approval-type components of the workflow to the number of all the components of the workflow to be processed for the "business management system" is 0, and the ratio of the number of notification-type components of the workflow to the number of all the components of the workflow to be processed for the "business management system" is 0.33. The example illustrated in FIG. 11 indicates that the ratio of the number of confirmation-type components of workflows for all systems to the number of all components of the workflows for all the systems is 0.25, the ratio of the number of approval-type components of the workflows for all the systems to the number of all the components of the workflows for all the systems is 0.20, and the ratio of the number of notification-type components of the workflows for all the systems to the number of all the components of the workflows for all the systems is 0.25, while the ratios are registered in a record corresponding to the "average".

The information of the items is registered in the sixth table 31g by the calculating unit 33 (described later). The sixth table 31g is used for a process to be performed by the corrector 36 (described later).

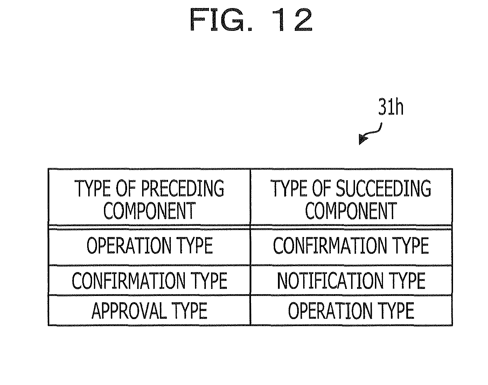

The seventh table 31h is a table that stores arrangement characteristics of the process types of components. FIG. 12 illustrates an example of the configuration of data included in the seventh table 31h. As illustrated in FIG. 12, the seventh table 31h includes an item for the types of preceding components and an item for the types of succeeding components.

The item for the types of preceding components is a region for storing process types of components that are arranged so as to precede components registered in the item for the types of succeeding components. The item for the types of succeeding components is a region for storing the process types of the components that are arranged so as to succeed the components registered in the item for the types of preceding components.

The components have characteristics indicated by the following items (1) to (3) depending on the process types.
(1) A confirmation-type component is arranged at the back of an operation-type component.
(2) A notification-type component is arranged at the back of a confirmation-type component.
(3) An operation-type component is arranged at the back of an approval-type component.

The example illustrated in FIG. 12 indicates that an "operation-type component" has a characteristic that the "operation-type component" is arranged in front of a "confirmation-type component" and a "confirmation-type component" has a characteristic that the "confirmation-type component" is arranged at the back of an "operation-type component". The example illustrated in FIG. 12 also indicates that a "confirmation-type component" has a characteristic that the "confirmation-type component" is arranged in front of a "notification-type component" and a "notification-type component" has a characteristic that the "notification-type component" is arranged at the back of a "confirmation-type component". The example illustrated in FIG. 12 also indicates that an "approval-type component" has a characteristic that the "approval-type component" is arranged in front of an "operation-type component" and an "operation-type component" has a characteristic that the "operation-type component" is arranged at the back of an "approval-type component".

The aforementioned characteristics are derived from a tendency of the following workflow. In the workflow, after an operation is performed, a process of confirming a result of the operation is performed. In the workflow, after the process of confirming the result of the operation is performed, a process of providing a notification indicating a result of the confirmation is performed. In the workflow, before the operation is performed, a process of receiving an approval for the operation is performed.

The information of the items is registered in the seventh table 31h in advance. The seventh table 31h is used for a process to be performed by the corrector 36 (described later).

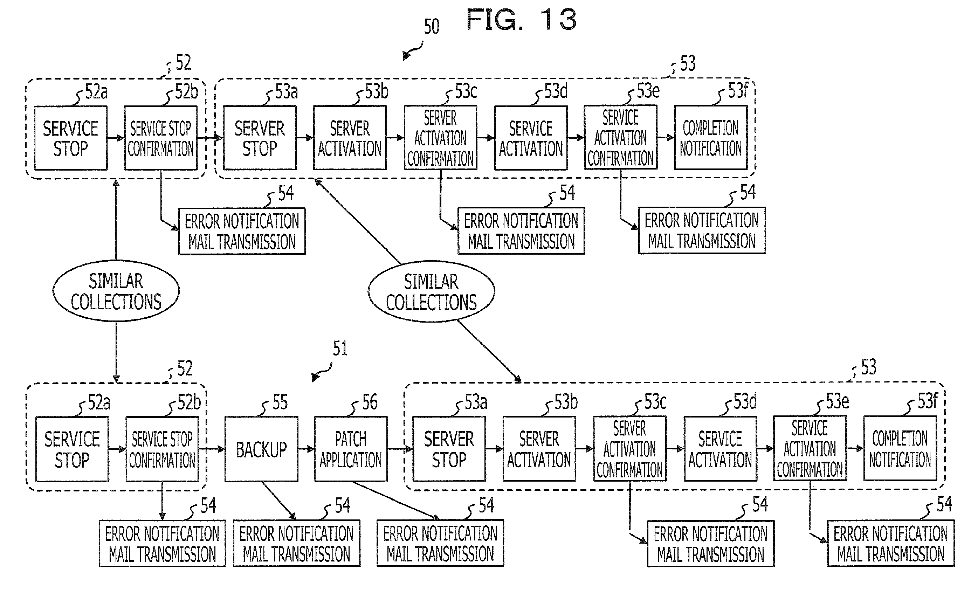

Even when workflows are created for different purposes, component collections that are similar to each other may exist in the workflows. FIG. 13 illustrates an example of the workflows. In the example of FIG. 13, two workflows 50 and 51 are illustrated, The workflow 50 is a workflow that indicates the flow of a process of reactivating a server 21 and is created to reactivate the server 21. The workflow 51 is a workflow that indicates the flow of applying an update module to the server 21 and is created to apply the patch.

In the workflow 50, the "service stop confirmation" component 52b is arranged at the back of the "service stop" component 52a. This flow indicates that after executing a command to stop a service of the server 21, the management server 30 confirms whether or not the service has been normally stopped. In the workflow 50, the "server stop" component 53a and the "error notification mail transmission" component 54 are arranged at the back of the "service stop confirmation" component 52b. This flows indicates that when the service has been normally stopped as a result of the confirmation of the stop of the service, the management server 30 executes a command to stop the server 21 and that when the service has been abnormally stopped or is not stopped, the management server 30 transmits an error notification mail to the administrator or the like. In the workflow 50, the "server activation" component 53b is arranged at the back of the "server stop" component 53a, and the "server activation confirmation" component 53c is arranged at the back of the "server activation" component 53b. This flow indicates that after the stop of the service, the management server 30 executes a command to activate the server 21, thereby activates the server 21, and confirms whether or not the server 21 has been normally activated. In the workflow 50, the "service activation" component 53d and the "error notification mail transmission" component 54 are arranged at the back of the "server activation confirmation" component 53c. This flow indicates that when the server 21 has been normally activated as a result of the confirmation of the activation of the server 21, the management server 30 executes a command to activate the service of the server 21, and that when the server 21 has been abnormally activated or is not activated, the management server 30 transmits an error notification mail to the administrator or the like. In the workflow 50, the "service activation confirmation" component 53e is arranged at the back of the "service activation" component 53d. This flow indicates that the management server 30 confirms whether or not the service has been normally activated. In the workflow 50, a "completion notification" component 53f and the "error notification mail transmission" component 54 are arranged at the back of the "service activation confirmation" component 53e. This flow indicates that when the service has been normally activated as a result of the confirmation of the activation of the service, the management server 30 transmits, to the administrator or the like, a notification indicating that the process has been normally completed, and that when the service has been abnormally activated or is not activated, the management server 30 transmits an error notification mail to the administrator or the like.

In the workflow 51, the "service stop confirmation" component 52b is arranged at the back of the "service stop" component 52a. This flow indicates that after executing a command to stop the service of the server 21, the management server 30 confirms whether or not the service has been normally stopped. In the workflow 51, the "backup" component 55 and the "error notification mail transmission" component 54 are arranged at the back of the "service stop confirmation" component 52b. The flow from the "service stop confirmation" component 52b to the "backup" component 55 indicates that when the service has been normally stopped as a result of the confirmation of the stop of the service, the management server 30 executes a command for backup and causes the server 21 to store the state of the server 21 before the application of the update module. In addition, the flow from the "service stop confirmation" component 52b to the "error notification mail transmission" component 54 indicates that when the service has been abnormally stopped or is not stopped as a result of the confirmation of the stop of the service, the management server 30 transmits an error notification mail to the administrator or the like. In the workflow 51, a "patch application" component 56 and the "error notification mail transmission" component 54 are arranged at the back of the "backup" component 55. The flow from the "backup" component 55 to the "patch application" component 56 indicates that after the backup, the management server 30 applies the update module to the server 21. The flow from the "backup" component 55 to the "error notification mail transmission" component 54 indicates that when the backup has been abnormally terminated or does not start, the management server 30 transmits an error notification mail to the administrator or the like. In the workflow 51, the "server stop" component 53a and the "error notification mail transmission" component 54 are arranged at the back of the "patch application" component 56. This flow indicates that when the update module has been normally applied, the management server 30 executes a command to stop the server 21, and that when the update module has not been applied, the management server 30 transmits an error notification mail to the administrator or the like. Components that succeed the "server stop" component 53a in the workflow 51 are the same as the components that succeed the "server stop" component 53a in the workflow 50.

The workflows 50 and 51 each include a collection 52 of the "service stop" and "service stop confirmation" components as a similar collection. In addition, the workflows 50 and 51 each include a collection 53 of the "server stop", "server activation", "server activation confirmation", "service activation", "service activation confirmation" and "completion notification" components as a similar collection. In the present embodiment, the management server 30 finds similar collections of components included in a plurality of workflows and specifies a group.

Returning to FIG. 5, the specifying unit 32 finds similar collections of components from the workflows stored in the first table 31b and specifies a group obtained by grouping a plurality of components included in each of the similar collections. As described above, components that are arranged in each of the workflows vary depending on the degree of importance of a target system. For example, the total number of confirmation-type, notification-type and approval-type components that are arranged in a workflow for a system having a high degree of importance is large. On the other hand, the total number of confirmation-type, notification-type and approval-type components that are arranged in a workflow for a system having a low degree of importance is small. Thus, even when operation-type components included in a workflow are the same as operation-type components included in another workflow, it is not easy to specify groups that perform similar processes, depending on whether or not confirmation-type, notification-type and approval-type components exist.

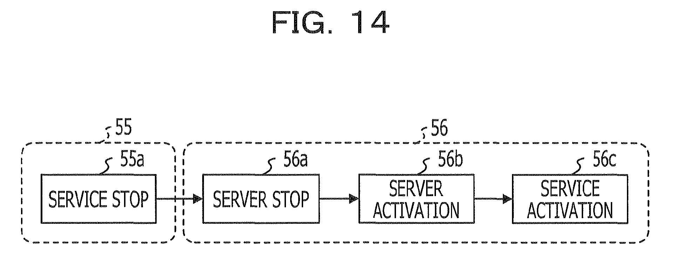

The specifying unit 32 specifies, on the basis of the second table 31c, process types of components of each of the workflows stored in the first table 31b. Then, the specifying unit 32 connects processes of operation-type components of each of the workflows stored in the first table 31b to each other, and thereby creates a workflow made up of the operation-type components for each of the workflows. FIG. 14 illustrates an example of the workflow made up of the operation-type components. The created workflows that are made up of operation-type components ("service stop" component 55a, "server stop" component56a, "server activation" component 56b and "service activation" component56c) are stored in the third table 31d. The specifying unit 32 performs pattern matching between the workflows made up of the operation-type components and specifies similar collections of components. For example, when a predetermined number (two or more) of workflows each include a flow made up of the same components, the specifying unit 32 specifies the flows as similar collections of components. For example, when the workflows 50 and 51 illustrated in FIG. 13, a workflow made up of the collection 52 illustrated in FIG. 13 and a workflow made up of the collection 53 illustrated in FIG. 13 exist, the specifying unit 32 specifies collections 55 and 56 illustrated in FIG. 14.

The specifying unit 32 causes a flow of a plurality of components included in each of collections specified by the specifying unit 32 to be stored as a group in the fourth table 31e.

In order to carefully monitor and maintain a system having a high degree of importance, many confirmation-type, approval-type and notification-type components are arranged in a workflow for the system. Thus, the ratio of the number of the confirmation-type, approval-type and notification-type components arranged in the workflow to the number of all components of the workflow is high. On the other hand, confirmation, approval and a notification to be provided to the administrator or the like are omitted as much as possible in a system having a low degree of importance, and the ratio of the number of confirmation-type, approval-type and notification type components arranged in a workflow for the system to the number of all components of the workflow for the system is low. This applies to the case where the same systems such as an operational system and a system to be used for test purposes operate. In this case, the degree of importance of the operational system is high, while the degree of importance of the system to be used for test purposes is low. The calculating unit 33 performs various calculations. For example, the calculating unit 33 calculates the ratio of the number of components of each of process types in a workflow to the number of all components of the workflow for each of the systems with the names stored in the first table 31b, while the process types are the confirmation type, the approval type and the notification type. In addition, the calculating unit 33 calculates the ratio of the number of components of each of the process types in workflows for all the systems with the names stored in the first table 31b to the number of all components of the workflows for all the systems, while the process types are the confirmation type, the approval type and the notification type. The calculating unit 33 causes the ratios of the numbers of confirmation-type, approval-type and notification-type components for each of the systems and the ratios of the numbers of the confirmation-type, approval-type and notification-type components for all the systems to be stored in the sixth table 31g.

The communicating unit 34 is connected to the management client 40 and controls transmission and reception of various types of information between the management server 30 and the management client 40.

The display control unit 35 transmits and receives various types of information through the communicating unit 34 to and from the management client 40 and controls the management client 40 so as to cause the management client 40 to display various types of information. For example, the display control unit 35 controls the management client 40 so as to cause the management client 40 to display a system specifying screen and the workflow creation screen in order to create a workflow. On the system specifying screen, a system for which a workflow is to be created is specified. The display control unit 35 receives information of various operations performed on the system specifying screen and the workflow creation screen from the management client 40, updates details displayed on the screens on the basis of details of the operations, and transmits information on the updated screens to the management client 40.

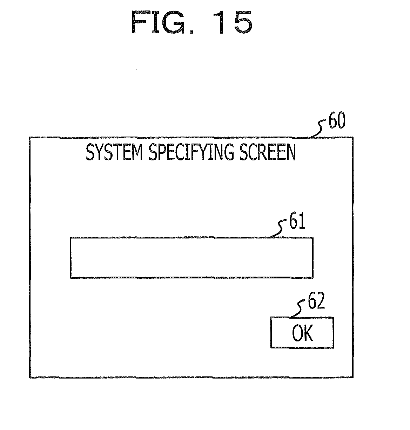

FIG. 15 illustrates an example of the system specifying screen. A system specifying screen 60 includes an OK button 62 and a region 61 for specifying a system for which a workflow is to be created. The user enters, in the region 61, information of a system for which a workflow is to be created. Then, the user presses the OK button 62 to specify the system. The information of the specified system is transmitted from the management client 40 to the management server 30. When each of the servers 21 has stored therein, as system information, information indicating that the server 21 is any of systems, the management server 30 may receive information of a server 21 specified by the user, and specify, on the basis of the system information, a system for which a workflow is to be created.

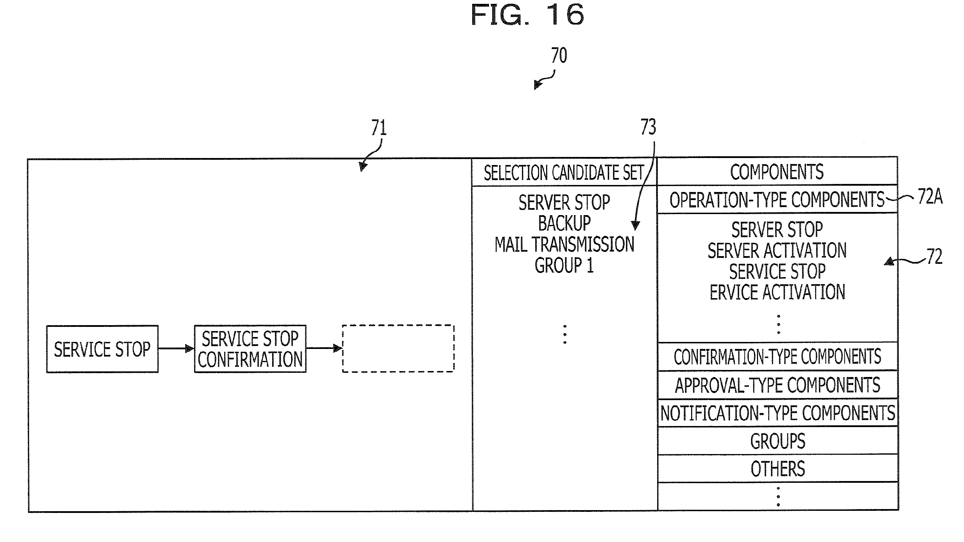

FIG. 16 illustrates an example of the workflow creation screen. A workflow creation screen 70 includes a workflow display region 71, a component display region 72 and a selection candidate region 73. The workflow display region 71 is a region for displaying a workflow that is being created or has been completely created. The component display region 72 is a region for displaying components and groups. The selection candidate region 73 is a region for displaying, as selection candidates, components estimated to be next arranged. In the component display region 72, components and groups are displayed while being layered. When an upper layer region 72A of the component display region 72 is specified, a lower-layered component or a lower-layered group is displayed. When the upper layer region 72A is specified again, the lower-layered component or the lower-layered group is hidden.

The display control unit 35 estimates, on the basis of the fifth table 31f stored in the storage unit 31, a component and a group that are of a process type tending to be arranged in front of or at the back of a component arranged in a workflow. Then, the display control unit 35 controls the management client 40 and thereby causes the management client 40 to display, in the selection candidate region 73 of the workflow creation screen 70, the component and the group that have been estimated to be next arranged. The estimation of the component and the group may be performed using any method. For example, when a workflow is to be created by connecting components to each other using an arrow indicating a process direction, the display control unit 35 determines, on the basis of the direction indicated by the arrow extending from a component, whether the next process has been specified as a preceding process or a succeeding process. When the display control unit 35 determines that the next process has been specified as the preceding process, the display control unit 35 estimates, as the next components, a component and a group that have been stored in the fifth table 31f as preceding components of the component from which the arrow extends. When the display control unit 35 determines that the next process has been specified as the succeeding process, the display control unit 35 estimates, as the next components, a component and a group that have been stored in the fifth table 31f as succeeding components of the component from which the arrow extends. For example, when a workflow is to be created in order from the preceding side of a process, the display control unit 35 estimates, as the next components, a component and a group that have been stored in the fifth table 31f as succeeding components of a component that precedes an interested component in the workflow. In addition, when a workflow is to be created in order from the succeeding side of a process, the display control unit 35 estimates, as the next components, a component and a group that have been stored in the fifth table 31f as preceding components of a component that succeeds an interested component in the workflow.

The corrector 36 corrects a selection candidate set that is one or more components that are displayed as selection candidates. For example, the corrector 36 corrects the selection candidate set on the basis of the seventh table 31h using tendencies of the process types of the components. When a process that succeeds an operation-type component is specified, the corrector 36 adds a confirmation-type component corresponding to the operation-type component to the selection candidate set and thereby corrects the selection candidate set. When a process that precedes a confirmation-type component is specified, the corrector 36 adds an operation-type component corresponding to the confirmation-type component to the selection candidate set and thereby corrects the selection candidate set. For example, when a process that succeeds the "service activation" component that is an operation-type component is specified, the corrector 36 adds the "service activation confirmation" component corresponding to the "service activation" component to the selection candidate set and thereby corrects the selection candidate set. When a process that succeeds a confirmation-type operation is specified, the corrector 36 adds a notification-type component to the selection candidate set and thereby corrects the selection candidate set. When a process that precedes a notification-type component is specified, the corrector 36 adds a confirmation-type component to the selection candidate set and thereby corrects the selection candidate set. When a process that succeeds an approval-type component is specified, the corrector 36 adds an operation-type component to the selection candidate set and thereby corrects the selection candidate set. When a process that precedes an operation-type component is specified, the corrector 36 adds an approval-type component corresponding to the operation-type component to the selection candidate set and thereby corrects the selection candidate set.

In addition, the corrector 36 may correct the selection candidate set on the basis of the ratio of the number of components to the number of all components of a workflow. For example, the corrector 36 reads, from the sixth table 31g, the ratios of the numbers of confirm-type, approval-type and notification-type components of a workflow to the number of all components of the workflow to be created for a system specified on the system specifying screen as a system for which the workflow is to be created. In addition, the corrector 36 reads, from the sixth table 31g, the ratios of the numbers of confirm-type, approval-type and notification-type components of workflows for all systems to the number of all components of the workflows for all the systems. Then, the corrector 36 corrects the selection candidate set by adding, to the selection candidate set, a component of a process type whose ratio of the number of components to the number of all the components of the workflow for the specified system is higher than the ratio of the number of components of the interested process type in the workflows for all the systems to the number of all the components of the workflows for all the systems. In addition, the corrector 36 corrects the selection candidate set by removing, from the selection candidate set, a component of a process type whose ratio of the number of components to the number of all the components of the workflow for the specified system is lower than the ratio of the number of components of the interested process type to the number of all the components of the workflows for all the systems. Thus, when the ratios of the numbers of the confirm-type, approval-type and notification-type components of the workflow to the number of all the components of the workflow to be created for the specified system are higher than the average ratios of the numbers of the confirm-type, approval-type and notification-type components of the workflows for all the systems to the number of all the components of the workflows for all the systems, confirm-type, approval-type and notification-type components are displayed as selection candidates. On the other hand, when the ratios of the numbers of the confirm-type, approval-type and notification-type components of the workflow to the number of all the components of the workflow to be created for the specified system are lower than the average ratios, confirm-type, approval-type and notification-type components are not displayed as selection candidates.

In addition, the corrector 36 adds a component to a group displayed as the selection candidate set on the basis of the ratios of the numbers of the confirmation-type, approval-type and notification-type components and thereby corrects the selection candidate set. For example, the corrector 36 corrects the selection candidate set by adding, to the group, a component of a process type whose ratio of the number of components to the number of all the components of the workflow for the specified system is higher than the ratio of the number of components of the interested process type in the workflows for all the systems to the number of all the components of the workflows for all the systems. Components of the process types may be added to the group in accordance with a predetermined rule. For example, when an operation-type component is included in the group, the corrector 36 may add a confirmation-type component to the group so that the confirmation-type component is arranged at the back of the operation-type component. When a confirmation-type component is included in the group, the corrector 36 may add a notification-type component to the group so that the notification-type component is arranged at the back of the confirmation-type component. The corrector 36 may add, on the basis of the characteristic of each of the process types stored in the seventh table 31h illustrated in FIG. 12, a component of the process type to the group. In addition, the corrector 36 may add, on the basis of an arrangement tendency of each of the components stored in the fifth table 31h illustrated in FIG. 10, a component of each of the process types to the group. For example, when a certain component has been arranged a predetermined number of times or more so as to precede a component that is of a process type and to be added to the group, the corrector 36 may add the interested component to the group as a process succeeding the certain component. When a certain component has been arranged a predetermined number of times or more so as to succeed a component that is of a process type and to be added to the group, the corrector 36 may add the interested component to the group as a process preceding the certain component.

The workflow managing unit 37 causes a created workflow to be stored in the first table 31b on the basis of information transmitted by the management client 40 and indicating the created workflow. The workflow managing unit 37 finds components preceding and succeeding each of components on the basis of the component names and next component numbers of each of workflows stored in the first table 31b and updates the fifth table 31f.

The operation managing unit 38 performs processes of the workflows stored in the first table 31b and thereby monitors and maintains the servers 21. FIG. 5 illustrates the functional configuration. The specifying unit 32, the calculating unit 33, the communicating unit 34, the display control unit 35, the corrector 36, the workflow managing unit 37 and the operation managing unit 38 are separated from each other in FIG. 5, but may be included in a single device. Examples of the single device are electronic circuits such as a CPU and an MPU. As the single device, integrated circuits such as an ASIC and an FPGA may be used.

The management client 40 includes a communicating unit 41, a display unit 42 and a controller 43. The communicating unit 41 is connected to the communicating unit 34 of the management server 30 and controls transmission and reception of various types of information between the management client 40 and the management server 30.

The display unit 42 displays various types of information in a display region. The display unit 42 displays the aforementioned system specifying screen and the aforementioned workflow creation screen. An example of a device of the display unit 42 is a display device such as an LCD.

The controller 43 controls various processes in the management client 40. For example, the controller 43 controls the display unit 42 on the basis of various types of information transmitted by the management server 30 and thereby causes the display unit 42 to display various screens such as the system specifying screen and the workflow creation screen. In addition, the controller 43 controls transmission of information to the management server 30, while the information is operation information received through the system specifying screen and the workflow creation screen and indicating various operations, and information of a workflow created on the workflow creation screen.

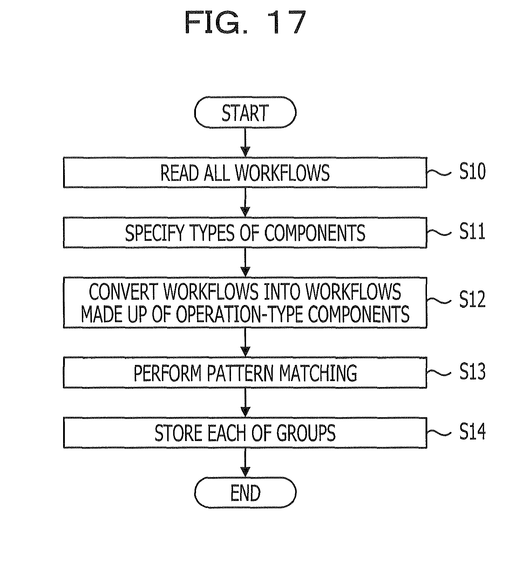

Next, the flows of processes to be performed by the management system 20 according to the present embodiment are described. FIG. 17 is a flowchart of a grouping process. The grouping process is performed at a predetermined time when a workflow is changed. For example, the grouping process is performed when a workflow is added, updated or deleted.

As illustrated in FIG. 17, the specifying unit 32 reads all the workflows stored in the first table 31b (in S10). Then, the specifying unit 32 specifies process types of components of each of the workflows on the basis of the second table 31c (in S11). The specifying unit 32 creates a workflow made up of operation-type components for each of the workflows (in S12). The specifying unit 32 performs pattern matching between the workflows made up of the operation-type components and specifies similar collections of components (in S13). Then, the specifying unit 32 causes a flow of the components included in each of the specified collections to be stored as a group in the fourth table 31e (in S14), and terminates the grouping process.

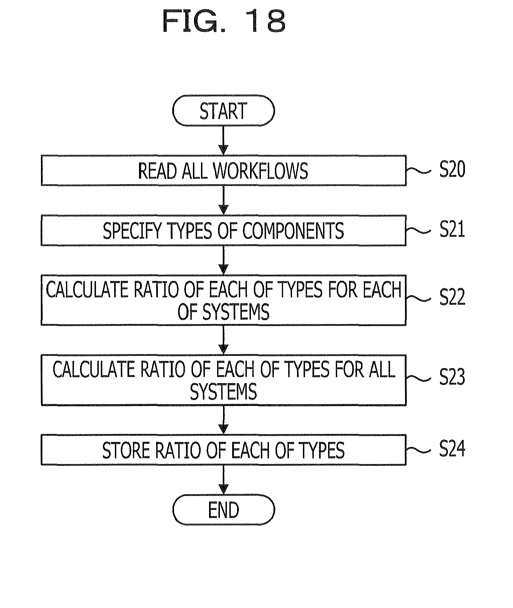

FIG. 18 is a flowchart of a procedure of a process of calculating a ratio. The process of calculating a ratio is performed at a predetermined time when a workflow is changed. For example, the process of calculating a ratio is performed when a workflow is added, updated or deleted.

As illustrated in FIG. 18, the calculating unit 33 reads the workflows created for all the systems and stored in the first table 31b (in S20). Then, the calculating unit 33 specifies process types of components of each of the workflows on the basis of the second table 31c (in S21). The calculating unit 33 calculates the ratio of the number of components of each of process types in a workflow for each of the systems to the number of all components of the workflow (in S22), while the process types are the confirmation type, the approval type and the notification type. The calculating unit 33 calculates the ratio of the number of components of each of the process types in the workflows for all the systems to the number of all the components of the workflows for all the systems (in S23), while the process types are the confirmation type, the approval type and the notification type. The calculating unit 33 causes the calculated ratios of the numbers of the confirmation-type, approval-type and notification-type components for each of the systems and the calculated ratios of the numbers of the confirmation-type, approval-type and notification-type components for all the systems to be stored in the sixth table 31g (in S24) and the terminates the process.

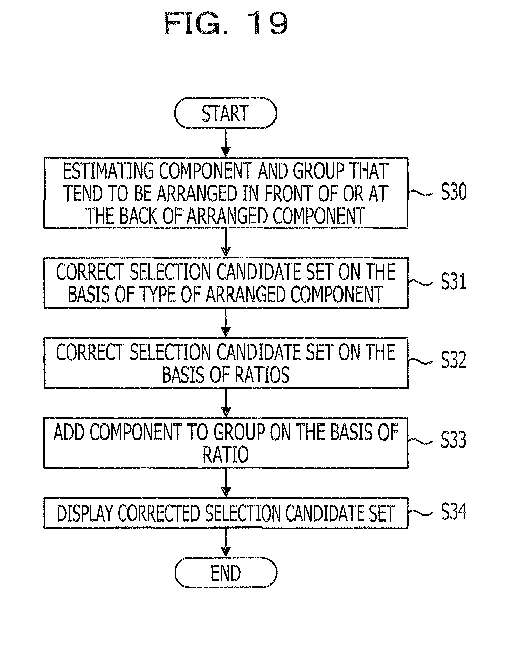

FIG. 19 is a flowchart of a procedure of a process of specifying a selection candidate. The process of specifying a selection candidate is performed when a component is arranged in a workflow on the workflow creation screen 70.

As illustrated in FIG. 19, the display control unit 35 estimates, as a selection candidate set, a component and a group that are of a process type tending to be arranged in front of or at the back of a component arranged in a workflow (in S30). The corrector 36 adds a component (to be displayed as a selection candidate) to the selection candidate set on the basis of a process type of the component arranged in the workflow (in S31). When the ratios of the numbers of confirmation-type, approval-type and notification-type components of the workflow for a target system to the number of all components of the workflow for the target system are higher than the average ratios of the numbers of confirmation-type, approval-type and notification-type components of workflows for all systems to the number of all components of the workflows for all the systems, the corrector 36 adds confirmation-type, approval-type and notification-type components to the selection candidate set (in S32). When the ratios of the numbers of the confirmation-type, approval-type and notification-type components of the workflow for the target system to the number of all the components of the workflow for the target system are lower than the average ratios, the corrector 36 removes confirmation-type, approval-type and notification-type components from the selection candidate set (in S32). When the ratios of the numbers of the confirmation-type, approval-type and notification-type components of the workflow for the target system to the number of all the components of the workflow are higher than the average ratios, the corrector 36 adds, to the group, a component of a process type whose ratio of the number of components to the number of all the components of the workflow for the target system is higher than the average ratio of the number of components of the interested process type in the workflows for all the systems to the number of all the components of the workflows for all the systems (in S33). The display control unit 35 controls the management client 40, thereby causes the management client 40 to display the selection candidate set corrected by the corrector 36 in the selection candidate region 73 of the workflow creation screen 70 (in S34) and terminates the process.

As described above, the management server 30 according to the present embodiment stores in the storage unit 31 the component information 31a that indicates the components to be arranged in the workflows. The management server 30 calculates the ratios of the numbers of components of each of the process types in workflows for all systems to the number of all the components of the workflows for all the systems, while the process types are the confirmation type, the approval type and the notification type. The management server 30 calculates the ratios of the numbers of components of each of the process types in a workflow for a target system to the number of all components of the workflow for the target system, while the process types are the confirmation type, the approval type and the notification type. In addition, the management server 30 controls the display unit 42 and thereby causes the display unit 42 to display a component that is a selection candidate estimated to be next arranged and among the components indicated by the component information 31a. When the ratio of the number of components of a process type in the workflow for the target system to the number of all the components of the workflow for the target system is higher than the average ratio of the number of components of the process type in the workflows for all the systems to the number of all the components of the workflows for all the systems, the management server 30 adds a component of the process type to a selection candidate set and thereby corrects the selection candidate set. Thus, when a workflow that includes confirmation-type, approval-type and notification-type components whose ratios of numbers to the number of all components of the workflow are higher than the average ratios of the numbers of the corresponding components of the workflows for all the systems to the number of all the components of the workflows for all the systems is to be created for a system having a high degree of importance, the management server 30 displays confirmation-type, approval-type and notification-type components as selection candidates. Thus, the management server 30 displays the screen on which the user may quickly select confirmation-type, approval-type and notification-type components from among selection candidates. The management server 30, therefore, enables a workflow to be efficiently created. When a workflow that includes confirmation-type, approval-type and notification-type components whose ratios of the numbers to the number of all components of the workflow are lower than the average ratios of the numbers of the corresponding components of the workflows for all the systems to the number of all the components of the workflows for all the systems is to be created for a system having a low degree of importance, the management server 30 removes confirmation-type, approval-type and notification-type components from selection candidates. In this case, the confirmation-type, approval-type and notification-type components are not displayed as selection candidates. Thus, when a workflow is to be created for a system having a low degree of importance, the management server 30 does not display such undesired components as selection candidates. Thus, the management server 30 displays the screen on which the user may quickly select desired components from among selection candidates. The management server 30, therefore, enables a workflow to be efficiently created.

The management server 30 according to the present embodiment stores, for each of components, a component tending to be arranged in front of the component in a workflow in the fifth table 31f of the storage unit 31. The management server 30 adds, to a selection candidate set on the basis of the fifth table 31f, a component of a process type tending to be arranged in front of or at the back of a component arranged in the workflow and thereby corrects the selection candidate set. Thus, the component that tends to be arranged in front of or at the back of the component arranged in the workflow is displayed as a selection candidate. Thus, the management server 30 displays the screen on which the user may quickly select a component that tends to be arranged in front of or at the back of a component arranged in a workflow. The management server 30, therefore, enables a workflow to be efficiently created.

The management server 30 according to the present embodiment stores information of a group obtained by grouping a flow of a plurality of operation-type components in the fourth table 31e of the storage unit 31. The management server 30 controls the display unit 42 and thereby causes the display unit 42 to display, as a selection candidate, the group that is among groups indicated in the fourth table 31e and has been estimated to be next arranged. Then, when the ratios of the numbers of confirmation-type, approval-type and notification-type components of a workflow created for a target system to the number of all components of the workflow created for the target system are higher than the average ratios of the numbers of the confirmation-type, approval-type and notification-type components of the workflows for all the systems to the number of all the components of the workflows for all the systems, the management server 30 adds confirmation-type, approval-type and notification-type components to the group and thereby corrects the selection candidate set. Thus, confirmation-type, approval-type and notification-type components are included in a group for a system for which a workflow that includes confirmation-type, approval-type and notification-type components whose ratios of the numbers to the number of all the components of the workflow are higher than the average ratios of the numbers of the corresponding components of the workflows for all the systems to the number of all the components of the workflows for all the systems is to be created. In the management server 30, when the group is selected, confirmation-type, approval-type and notification-type components are not separately selected. Thus, the management server 30 enables a workflow to be efficiently created. The embodiments of the apparatus disclosed herein are described above. The techniques disclosed herein may be used in various embodiments other than the aforementioned embodiments. The other embodiments are described below.

The first embodiment describes that a component that tends to be arranged in front of or at the back of each of components is stored in the order relationship information 4a, and that the display control unit 5 causes the display unit 2 to display the second component of the second process type defined by the order relationship with the first process type of the first component when the receiver 3 receives the instruction to display the first component. The apparatus disclosed herein, however, is not limited to this. For example, a process type of a component that tends to be arranged in front of or at the back of each of process types may be stored in the order relationship information 4a. In this case, an example of the order relationship information 4a is the configuration of the data stored in the seventh table 31h illustrated in FIG. 12. While the display unit 2 displays the first component when the receiver 3 receives the instruction to display the first component, the apparatus may specify the second component that indicates the details of the process corresponding to the second process type that has been defined by the order relationship with the first process type of the first component on the basis of the order relationship information 4a. The apparatus may associate the specified second component with the first component on the basis of the order relationship and cause the display unit 2 to display the first and second components.

The third embodiment describes that the apparatus stores a flow of a plurality of operation-type components as a group and corrects a selection candidate set by adding confirmation-type, approval-type and notification-type components to the group. The apparatus disclosed herein, however, is not limited to this. For example, the apparatus may store a flow of operation-type, confirmation-type, approval-type and notification-type components as a group. In this case, when the ratios of the numbers of the confirmation-type, approval-type and notification-type components of the workflow for the target system to the number of all the components of the workflow for the target system are lower than the average ratios for all the systems, the apparatus may remove the confirmation-type, approval-type and notification-type components from the group and thereby correct the selection candidate set.

Each of the processes that are performed in the steps of the processes described in the third embodiment may be arbitrarily divided on the basis of various types of loads and usage statuses. In addition, two or more of the processes that are performed in the steps of the processes described in the third embodiment may be combined. In addition, at least one of the steps of the processes described in the third embodiment may be omitted.

The constituent elements of the apparatuses are functionally conceptual elements and may not be physically configured as illustrated in the drawings. The separation and integration of the constituent elements of the apparatuses are not limited to those illustrated in the drawings. All or a part of the constituent elements of each of the apparatuses may be functionally or physically divided or integrated on an arbitrary basis on the basis of the various loads and the usage statuses. For example, the calculating unit 12 and the corrector 15 that are illustrated in FIG. 4 may be integrated. In addition, the specifying unit 32, the calculating unit 33 and the corrector 36 that are illustrated in FIG. 5 may be integrated. The workflow managing unit 37 and the operation managing unit 38 that are illustrated in FIG. 5 may be integrated.

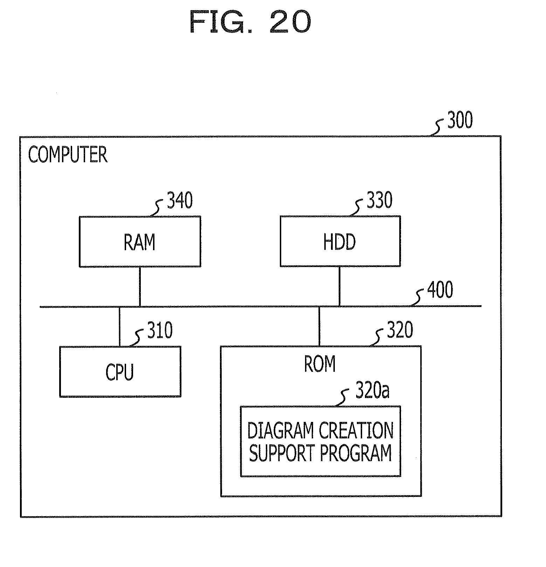

The various processes to be performed by the diagram creation supporting apparatuses described in the first to fourth embodiments may be achieved by causing a computer system such as a personal computer or a workstation to execute a prepared program. An example of a computer that executes a display control program that has the same functions as the diagram creation supporting apparatuses described in the embodiments is described below. FIG. 20 illustrates a hardware configuration of the computer that executes the diagram creation support program.

As illustrated in FIG. 21, a computer 300 includes a central processing unit (CPU) 310, a read only memory (ROM) 320, a hard disk drive (HDD) 330 and a random access memory (RAM) 340. The parts 310 to 340 are connected to each other through a bus 400.

The ROM 320 has stored therein a display control program 320a that has the same functions as the display control unit 14 and the corrector 15 or the same functions as the calculating unit 33, the display control unit 35 and the corrector 36.

The CPU 310 reads the display control program 320a from the ROM 320 and executes the display control program 320a. The functions of the calculating unit 12, the display control unit 14, the corrector 15, the calculating unit 33, the display control unit 35, the corrector 36 and the like are achieved by causing the CPU 310 to execute the display control program 320a.

The CPU 310 is an example of a processor that reads the display control program 320a from the ROM 320 and executes the display control program 320a. The processor is hardware that performs operations on the basis of at least one program (such as the display control program 320a) and controls other hardware such as a graphics processing unit (GPU), a floating point number processing unit (FPU) and a digital signal processor (DSP).

The HDD 330 has stored therein component information, workflow information, component type information, converted workflow information and group information. The component information, the workflow information, the component type information, the converted workflow information and the group information correspond to the component information 31a, the first table 31b, the second table 31c, the third table 31d, the fourth table 31e, the fifth table 31f, the sixth table 31g and the seventh table 31h, which are illustrated in FIG. 5.

The CPU 310 reads the component information, the workflow information, the component type information, the converted workflow information and the group information from the HDD 330 and causes the read information to be stored in the RAM 340. The CPU 310 executes the display control program 320a using the information stored in the RAM 340. All the information read by the CPU 310 may not be stored in the RAM 340. Information that is among the information read by the CPU 310 and is used for a process may be stored in the RAM 340.

The HDD 330 may not have stored therein the display control program 320a.

For example, the display control program 320a may be stored in a "portable physical medium" to be inserted into the computer 300, while the "portable physical medium" is, for example, a flexible disk (FD), a CD-ROM, a DVD, a magnetooptical disc, or an IC card. The computer 300 may read the display control program 320a from the "portable physical medium" and execute the display control program 320a.

In addition, "another computer (or server)" that is connected to the computer 300 through a public line, the Internet, a LAN, a WAN or the like may store the display control program 320a, and the computer 300 may read the display control program 320a from the "other computer (or server)" and execute the display control program 320a.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. A computer-readable recording medium storing a display control program that causes a computer to execute a procedure, the procedure comprising:
receiving an instruction to display a first component which indicates a process corresponding to a first process type; and
controlling a display unit to display the first component in accordance with the received instruction and display a second component, which indicates a process corresponding to a second process type, associating with the first component on the basis of an order relationship of the first process type and the second process type.

2. The recording medium according to claim 1, wherein
the order relationship includes an order relationship indicating that a process, which is performing an operation, corresponding to the first process type is performed after a process, which is receiving approval of the performing, corresponding to the first process type.

3. The recording medium according to claim 1, wherein
the order relationship includes an order relationship indicating that a process, which is performing an operation, corresponding to the first process type, is performed before a process, which is confirming a result of the performing, corresponding to the second process type.

4. The recording medium according to claim 1, wherein
the order relationship includes an order relationship indicating that a process, which is confirming a result, corresponding to the first process type, is performed before a process, which is notifying the confirmed result, corresponding to the second process type.

5. The recording medium according to any one of claims 1 to 4, the procedure further comprising:
controlling the display unit to display a plurality of components, each of which indicates a process corresponding to a process type defined the order relationship with the first process type, wherein the second component is selected from the displayed plurality of components.

6. The recording medium according to claim 5, wherein
the plurality of components are selected based on frequency of arrangement.

7. A display control method comprising:
receiving an instruction to display a first component which indicates a process corresponding to a first process type; and
controlling, by a processor, a display unit to display the first component in accordance with the received instruction and display a second component, which indicates a process corresponding to a second process type, associating with the first component on the basis of an order relationship of the first process type and the second process type.

8. The display control method according to claim 7, wherein
the order relationship includes an order relationship indicating that a process, which is performing an operation, corresponding to the first process type is performed after a process, which is receiving approval of the performing, corresponding to the first process type.

9. The display control method according to claim 7, wherein
the order relationship includes an order relationship indicating that a process, which is performing an operation, corresponding to the first process type, is performed before a process, which is confirming a result of the performing, corresponding to the second process type.

10. The display control method according to claim 7, wherein
the order relationship includes an order relationship indicating that a process, which is confirming a result, corresponding to the first process type, is performed before a process, which is notifying the confirmed result, corresponding to the second process type.

11. The display control method according to any one of claims 7 to 10, further comprising:
controlling the display unit to display a plurality of components, each of which indicates a process corresponding to a process type defined the order relationship with the first process type, wherein the second component is selected from the displayed plurality of components.

12. A display control apparatus comprising:
receiving unit that receives an instruction to display a first component which indicates a process corresponding to a first process type; and
controlling unit that controls a display device to display the first component in accordance with the received instruction and display a second component, which indicates a process corresponding to a second process type, associating with the first component on the basis of an order relationship of the first process type and the second process type.

13. The display control apparatus according to claim 12, wherein
the order relationship includes an order relationship indicating that a process, which is performing an operation, corresponding to the first process type is performed after a process, which is receiving approval of the performing, corresponding to the first process type.

14. The display control apparatus according to claim 12, wherein
the order relationship includes an order relationship indicating that a process, which is performing an operation, corresponding to the first process type, is performed before a process, which is confirming a result of the performing, corresponding to the second process type.

15. The display control apparatus according to claim 12, wherein
the order relationship includes an order relationship indicating that a process, which is confirming a result, corresponding to the first process type, is performed before a process, which is notifying the confirmed result, corresponding to the second process type.
